# EUROPEAN PATENT APPLICATION

(11) **EP 4 123 449 A1**
(43) Date of publication of application: **25.01.2023**
(21) Application number: 21792088.3
(22) Date of filing: 05.02.2021
(51) Int. Cl.: G06F 9/48

(54) **RESOURCE SCHEDULING METHOD AND RELATED DEVICE**

(30) Priority: 21.04.2020 CN 202010320718
(71) Applicant: Huawei Cloud Computing Technologies Co., Ltd., Guizhou 550025 (CN)
(72) Inventor: HUANG, Xiaojian, Shenzhen, Guangdong 518129 (CN)
(74) Representative: Pfenning, Meinig & Partner mbB
(86) International application number: PCT/CN2021/075526
(87) International publication number: WO 2021/212965

(57) **Abstract**

Embodiments of this application provide a resource scheduling method and a related apparatus. The method includes: A scheduling node receives a task; the scheduling node obtains a target execution duration level to which the task belongs, where the target execution duration level is used to represent a time length, and the target execution duration level indicates to use a target compute module of a target compute node in a plurality of compute nodes to execute the task; and the scheduling node preferably sends the task to the target compute node corresponding to the target execution duration level. According to embodiments of this application, tasks at a same execution duration level can be preferably scheduled to a same compute node for execution. After running of a task with relatively short execution duration ends, an entire idle compute module is easier to obtain, so that resource fragments in the compute node are reduced and resource utilization is improved.

## Description

### TECHNICAL FIELD

This application relates to the field of big data technologies, and in particular, to a resource scheduling method and a related apparatus.

### BACKGROUND

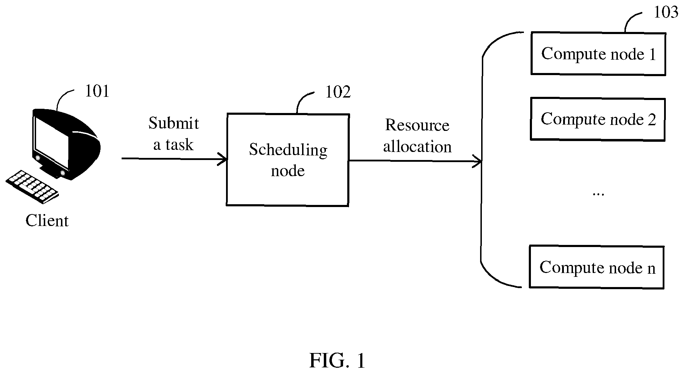

With the advent of the big data and Internet era, big data technologies have become a research hotspot in academic and industrial communities. For example, technologies such as artificial intelligence (artificial intelligence, Al) and cloud computing need to develop and evolve based on the big data technologies. Most processing resources used in the big data technologies are distributed resources. Therefore, a resource scheduling system used to manage distributed resources is widely used in the scientific research field and enterprises. FIG. 1 is a schematic diagram of an architecture of a resource scheduling system. A compute node 103 has at least one compute module. A scheduling node 102 receives a task submitted by a client 101, and allocates, based on a compute resource required by the task, the task to the compute module in the compute node 103 for execution. For example, an open-source big data processing platform Hadoop launched by Apache uses a resource scheduling system Yarn to allocate system resources and schedule tasks in a unified manner. Yarn enables a plurality of computing frameworks (such as a programming framework MapReduce, a memory computing framework Spark, a streaming computing framework Strom, and a graph computing framework) to run in a same system and provides unified resource allocation services for different parallel computing, so that the system features easy operation and maintenance, elastic and scalable resources, sharable data, and the like. It can be learned that a resource scheduling system is one of core components of a big data platform, and a scheduling policy of the resource scheduling system directly affects task allocation of distributed resources, and further affects overall performance of a distributed resource system.

A current resource scheduling system determines, based on a quantity of processing resources required by a task, a compute module of a compute node to which the task is to be scheduled for processing. For example, Yarn schedules a task based on computing power or video memory required by the task submitted by a client. However, such a scheduling policy does not consider a difference between tasks submitted by users. Therefore, a large quantity of resource fragments exist on the compute node, and processing resources cannot be fully used. For example, FIG. 1 is a schematic diagram of an operating scenario of a resource scheduling system. Some tasks submitted by a client 201 require relatively short execution duration, for example, a task 1, a task 3, and a task 4, and occupy compute resources for a very short time. Some tasks require relatively long execution duration, for example, a task 2, and usually occupy compute resources for a relatively long time. In this case, if a scheduling system 202 allocates the task 1, the task 2, and the task 3 to one compute module (that is, a compute module 1) on a same compute node (that is, a compute node 1) for processing, after running of tasks with short execution duration (for example, the task 1 and the task 2) ends and the tasks are released, a remaining fragmented resource in the compute node cannot be used by another task. This is a serious resource waste, and resource utilization is greatly reduced. Consequently, task execution efficiency is directly affected and overall system performance is reduced.

Therefore, how to reduce resource fragments in a compute node is a topic that is being studied by persons skilled in the art.

### SUMMARY

Embodiments of this application disclose a resource scheduling method and a related apparatus, to reduce resource fragments in a compute node and improve resource utilization.

According to a first aspect, an embodiment of this application discloses a resource scheduling method, including:
a scheduling node receives a task;
the scheduling node obtains a target execution duration level to which the task belongs, where the target execution duration level is used to represent a time length, and the target execution duration level indicates to use a target compute module of a target compute node in a plurality of compute nodes to execute the task; and
the scheduling node preferably sends the task to the target compute node corresponding to the target execution duration level.

In this embodiment of this application, the scheduling node establishes a correspondence between an execution duration level and a compute node (or a compute module in a compute node). After a task is received, the task is scheduled to a compute node corresponding to an execution duration level to which the task belongs. Tasks at a same execution duration level may be preferably scheduled to a same compute node for execution, that is, tasks processed by a same compute module in a compute node usually belong to a same execution duration level. In this way, after running of a task with relatively short execution duration ends, an entire idle compute module is easier to obtain, so that resource fragments in the compute node are reduced and resource utilization is improved.

In a possible implementation of the first aspect, before the scheduling node obtains the target execution duration level to which the task belongs, the method further includes:
the scheduling node receives a scheduling request for the task, where the scheduling request includes the target execution duration level; and
that the scheduling node obtains a target execution duration level to which the task belongs includes:
   the scheduling node parses the scheduling request, to obtain the target execution duration level.

It can be learned that when the task is submitted, indication information used to indicate the execution duration level may be carried in the scheduling request, so that the scheduling node schedules the task based on the target execution duration indicated by the indication information.

In another possible implementation of the first aspect, that the scheduling node obtains a target execution duration level to which the task belongs includes:
the scheduling node determines an execution duration level corresponding to execution duration of the task, where the determined execution duration level is the target execution duration level.

It can be learned that when receiving the task, the scheduling node may determine, based on information about the task, the execution duration required by the task, and may further determine the target execution duration level corresponding to the execution duration. For example, the scheduling node stores execution duration of a previously scheduled task. When receiving the task, the scheduling node may estimate the execution duration of the task based on execution duration of a previously scheduled similar task, and further obtain the target execution duration level of the task.

In another possible implementation of the first aspect, the target execution duration level is one of three execution duration levels, and the three execution duration levels include long execution duration, medium execution duration, and short execution duration, where
the long execution duration is greater than or equal to a first threshold;
the medium execution duration is less than the first threshold and greater than a second threshold; and
the short execution duration is less than or equal to the second threshold.

In another possible implementation of the first aspect, that the scheduling node preferably sends the task to the target compute node corresponding to the target execution duration level includes:
sending the task to the target compute node when the target compute node having the target compute module exists.

In this embodiment of this application, the target execution duration level may indicate to use the target compute module of the target compute node in the plurality of compute nodes to execute the task. Therefore, the scheduling node sends the task to the target compute node, so that execution duration levels of tasks executed by the target compute module in the target compute node are the same. In this way, after running of a task with relatively short execution duration ends, a relatively large idle compute resource can be obtained, and resource fragments in the compute module are reduced.

In another possible implementation of the first aspect, the target compute module is a compute module marked with a first label, and the first label represents that the compute module executes another task at the target execution duration level.

In this embodiment of this application, compute modules may be marked with different labels, and the different labels represent that the compute modules currently process tasks at different execution duration levels. When performing scheduling, the scheduling node may preferably schedule the task to a compute module that is processing a task at a same execution duration level. Compared with a method in which the target execution duration is directly used to indicate the target module, a method in which different duration levels correspond to compute modules with different labels can improve system resource allocation flexibility, so that resource utilization is improved.

In another possible implementation of the first aspect, that the scheduling node preferably sends the task to the target compute node corresponding to the target execution duration level includes:
sending the task to another compute node in the plurality of compute nodes when the target compute node having the target compute module does not exist.

In another possible implementation of the first aspect, the sending the task to another compute node in the plurality of compute nodes when the target compute node having the target compute module does not exist includes:
sending the task to a first compute node when the target compute node having the target compute module does not exist, where the first compute node has a compute module that is not processing a task.

In another possible implementation of the first aspect, the method further includes:
the scheduling node sends the task to a second compute node if the target compute node having the target compute module does not exist and the first compute node does not exist, where the second compute node has a compute module marked with a second label, the second label represents that the compute module is processing another task at a first execution duration level, and execution duration required by the task at the first execution duration level is shorter than execution duration required by the task.

In another possible implementation of the first aspect, the method further includes:
the scheduling node sends the task to a third compute node if the target compute node having the target compute module does not exist and the first compute node does not exist, where the second compute node has a compute module marked with a third label, the third label represents that the compute module is processing another task at a second execution duration level, and execution duration required by the task at the second execution duration level is longer than execution duration required by the task.

In another possible implementation of the first aspect, the method further includes:
the scheduling node marks the target compute module of the target compute node with the first label, where the first label represents that the compute module executes a task at the target execution duration level.

It can be learned that the scheduling node may modify the label of the compute module, so that the label of the compute module corresponds to the execution duration level of the task being processed by the compute module, and this facilitates subsequent scheduling of another task.

In another possible implementation of the first aspect, the method further includes:
the scheduling node deletes the label of the target compute module if execution of the task ends and the target compute module is not processing another task.

According to a second aspect, an embodiment of this application discloses a resource scheduling apparatus, including:
a receiving unit, configured to receive a task;
a processing unit, configured to obtain a target execution duration level to which the task belongs, where the target execution duration level is used to represent a time length, and the target execution duration level indicates to use a target compute module of a target compute node in a plurality of compute nodes to execute the task; and
a sending unit, configured to preferably send the task to the target compute node corresponding to the target execution duration level.

In this embodiment of this application, the resource scheduling apparatus establishes a correspondence between an execution duration level and a compute node (or a compute module in a compute node). After a task is received, the task is scheduled to a compute node corresponding to an execution duration level to which the task belongs. Tasks at a same execution duration level may be preferably scheduled to a same compute node for execution, that is, tasks processed by a same compute module in a compute node usually belong to a same execution duration level. In this way, after running of a task with relatively short execution duration ends, an entire idle compute module is easier to obtain, so that resource fragments in the compute node are reduced and resource utilization is improved.

In a possible implementation of the second aspect, the receiving unit is further configured to receive a scheduling request for the task, where the scheduling request includes the target execution duration level; and
the processing unit is specifically configured to parse the scheduling request, to obtain the target execution duration level.

It can be learned that when the task is submitted, indication information used to indicate the execution duration level may be carried in the scheduling request, so that the scheduling node schedules the task based on the target execution duration indicated by the indication information.

In another possible implementation of the second aspect, the processing unit is specifically configured to determine an execution duration level corresponding to execution duration required by the task, and the determined execution duration level is the target execution duration level.

It can be learned that when receiving the task, the foregoing apparatus may determine, based on information about the task, the execution duration required by the task, and may further determine the target execution duration level corresponding to the execution duration. For example, the foregoing apparatus stores execution duration of a previously scheduled task. When receiving the task, the foregoing apparatus may estimate the execution duration of the task based on execution duration of a previously scheduled similar task, and further obtain the target execution duration level of the task.

In another possible implementation of the second aspect, the target execution duration level is one of three execution duration levels, and the three execution duration levels include long execution duration, medium execution duration, and short execution duration, where
the long execution duration is greater than or equal to a first threshold;
the medium execution duration is less than the first threshold and greater than a second threshold; and
the short execution duration is less than or equal to the second threshold.

In another possible implementation of the second aspect, the sending unit is specifically configured to send the task to the target compute node when the target compute node having the target compute module exists.

In this embodiment of this application, the target execution duration level may indicate to use the target compute module of the target compute node in the plurality of compute nodes to execute the task. Therefore, the foregoing apparatus sends the task to the target compute node, so that execution duration levels of tasks executed by the target compute module in the target compute node are the same. In this way, after running of a task with relatively short execution duration ends, a relatively large idle compute resource can be obtained, and resource fragments in the compute module are reduced.

In another possible implementation of the second aspect, the target compute module is a compute module marked with a first label, and the first label represents that the compute module executes another task at the target execution duration level.

In this embodiment of this application, compute modules may be marked with different labels, and the different labels represent that the compute modules currently process tasks at different execution duration levels. When performing scheduling, the foregoing apparatus may preferably schedule the task to a compute module that is processing a task at a same execution duration level. Compared with a method in which the target execution duration is directly used to indicate the target module, a method in which different duration levels correspond to compute modules with different labels can improve system resource allocation flexibility, so that resource utilization is improved.

In another possible implementation of the second aspect, the sending unit is specifically configured to send the task to another compute node when the target compute node having the target compute module does not exist.

In another possible implementation of the second aspect, the sending unit is specifically configured to send the task to a first compute node when the target compute node having the target compute module does not exist, where the first compute node has a compute module that is not processing a task.

In another possible implementation of the second aspect, the sending unit is further configured to send the task to a second compute node if the target compute node having the target compute module does not exist and the first compute node does not exist, where the second compute node has a compute module marked with a second label, the second label represents that the compute module is processing another task at a second execution duration level, and execution duration required by the task at the second execution duration level is shorter than execution duration required by the task.

In another possible implementation of the second aspect, the sending unit is further configured to send the task to a third compute node if the target compute node having the target compute module does not exist and the first compute node does not exist, where the second compute node has a compute module marked with a third label, the third label represents that the compute module is processing another task at a third execution duration level, and execution duration required by the task at the third execution duration level is longer than execution duration required by the task.

In another possible implementation of the second aspect, the processing unit is further configured to mark the target compute module of the target compute node with the first label, where the first label represents that the compute module executes a task at the target execution duration level.

It can be learned that the foregoing apparatus may modify the label of the compute module, so that the label of the compute module corresponds to the execution duration level of the task being processed by the compute module, and this facilitates subsequent scheduling of another task.

In another possible implementation of the second aspect, the processing unit is further configured to delete the first label of the target compute module if execution of the task ends and the target compute module is not processing another task.

According to a third aspect, an embodiment of this application discloses a scheduling node, including a processor and a memory. The processor is configured to execute computer instructions stored in the memory, so that the scheduling node implements the method described in any one of the first aspect or the possible implementations of the first aspect.

In a possible implementation of the third aspect, the scheduling node further includes a communications interface, and the processor is specifically configured to:
receive a task by using the communications interface;
obtain a target execution duration level to which the task belongs, where the target execution duration level is used to represent a time length, and the target execution duration level indicates to use a target compute module of a target compute node in a plurality of compute nodes to execute the task; and
preferably send the task to the target compute node corresponding to the target execution duration level by using the communications interface.

In this embodiment of this application, the scheduling node establishes a correspondence between an execution duration level and a compute node (or a compute module in a compute node). After a task is received, the task is scheduled to a compute node corresponding to an execution duration level to which the task belongs. Tasks at a same execution duration level may be preferably scheduled to a same compute node for execution, that is, tasks processed by a same compute module in a compute node usually belong to a same execution duration level. In this way, after running of a task with relatively short execution duration ends, an entire idle compute module is easier to obtain, so that resource fragments in the compute node are reduced and resource utilization is improved.

In another possible implementation of the third aspect, the processor is specifically configured to: receive a scheduling request for the task by using the communications interface, where the scheduling request includes the target execution duration level; and
parse the scheduling request, to obtain the target execution duration level.

It can be learned that when the task is submitted, indication information used to indicate the execution duration level may be carried in the scheduling request, so that the scheduling node schedules the task based on the target execution duration indicated by the indication information.

In another possible implementation of the third aspect, the processor is specifically configured to determine an execution duration level corresponding to execution duration of the task, and the determined execution duration level is the target execution duration level.

It can be learned that when receiving the task, the scheduling node may determine, based on information about the task, the execution duration required by the task, and may further determine the target execution duration level corresponding to the execution duration. For example, the scheduling node stores execution duration of a previously scheduled task. When receiving the task, the scheduling node may estimate the execution duration of the task based on execution duration of a previously scheduled similar task, and further obtain the target execution duration level of the task.

In another possible implementation of the third aspect, the target execution duration level is one of three execution duration levels, and the three execution duration levels include long execution duration, medium execution duration, and short execution duration, where
the long execution duration is greater than or equal to a first threshold;
the medium execution duration is less than the first threshold and greater than a second threshold; and
the short execution duration is less than or equal to the second threshold.

In another possible implementation of the third aspect, the processor is specifically configured to send the task to the target compute node by using the communications interface when the target compute node having the target compute module exists.

In this embodiment of this application, the target execution duration level may indicate to use the target compute module of the target compute node in the plurality of compute nodes to execute the task. Therefore, the scheduling node sends the task to the target compute node, so that execution duration levels of tasks executed by the target compute module in the target compute node are the same. In this way, after running of a task with relatively short execution duration ends, a relatively large idle compute resource can be obtained, and resource fragments in the compute module are reduced.

In another possible implementation of the third aspect, the target compute module is a compute module marked with a first label, and the first label represents that the compute module executes another task at the target execution duration level.

In this embodiment of this application, compute modules may be marked with different labels, and the different labels represent that the compute modules currently process tasks at different execution duration levels. When performing scheduling, the scheduling node may preferably schedule the task to a compute module that is processing a task at a same execution duration level. Compared with a method in which the target execution duration is directly used to indicate the target module, a method in which different duration levels correspond to compute modules with different labels can improve system resource allocation flexibility, so that resource utilization is improved.

In another possible implementation of the third aspect, the processor is specifically configured to send the task to another compute node in the plurality of compute nodes by using the communications interface when the target compute node having the target compute module does not exist.

In another possible implementation of the third aspect, the processor is specifically configured to send the task to a first compute node by using the communications interface when the target compute node having the target compute module does not exist, where the first compute node has a compute module that is not processing a task.

In another possible implementation of the third aspect, the processor is further configured to send the task to a second compute node by using the communications interface if the target compute node having the target compute module does not exist and the first compute node does not exist, where the second compute node has a compute module marked with a second label, the second label represents that the compute module is processing another task at a first execution duration level, and execution duration required by the task at the first execution duration level is shorter than execution duration required by the task.

In another possible implementation of the third aspect, the processor is further configured to send the task to a third compute node by using the communications interface if the target compute node having the target compute module does not exist and the first compute node does not exist, where the second compute node has a compute module marked with a third label, the third label represents that the compute module is processing another task at a second execution duration level, and execution duration required by the task at the second execution duration level is longer than execution duration required by the task.

In another possible implementation of the third aspect, the processor is further configured to mark the target compute module of the target compute node with the first label, where the first label represents that the compute module executes a task at the target execution duration level.

It can be learned that the scheduling node may modify the label of the compute module, so that the label of the compute module corresponds to the execution duration level of the task being processed by the compute module, and this facilitates subsequent scheduling of another task.

In another possible implementation of the third aspect, the processor is further configured to delete the first label of the target compute module if execution of the task ends and the target compute module is not processing another task.

According to a fourth aspect, an embodiment of this application discloses a computer-readable storage medium, where the computer-readable storage medium stores computer instructions, and the computer instructions are used to implement the method described in any one of the first aspect or the possible implementations of the first aspect.

According to a fifth aspect, an embodiment of this application discloses a chip system. The chip system includes at least one processor, a memory, and an interface circuit. The interface circuit is configured to provide information input/output for the at least one processor. The memory stores computer instructions. When the computer instructions are run on one or more processors, the method described in any one of the first aspect or the possible implementations of the first aspect is performed.

According to a sixth aspect, an embodiment of this application discloses a resource scheduling system. The resource scheduling system includes a resource scheduling apparatus, at least one client, and at least one compute node. The resource scheduling apparatus is configured to: receive a task from the at least one client, and send the task to at least one compute node for execution. The resource scheduling apparatus is the resource scheduling apparatus described in any one of the second aspect or the possible implementations of the second aspect.

### BRIEF DESCRIPTION OF DRAWINGS

The following describes accompanying drawings used in embodiments of this application.
FIG. 1 is a schematic diagram of an architecture of a resource scheduling system according to an embodiment of this application;

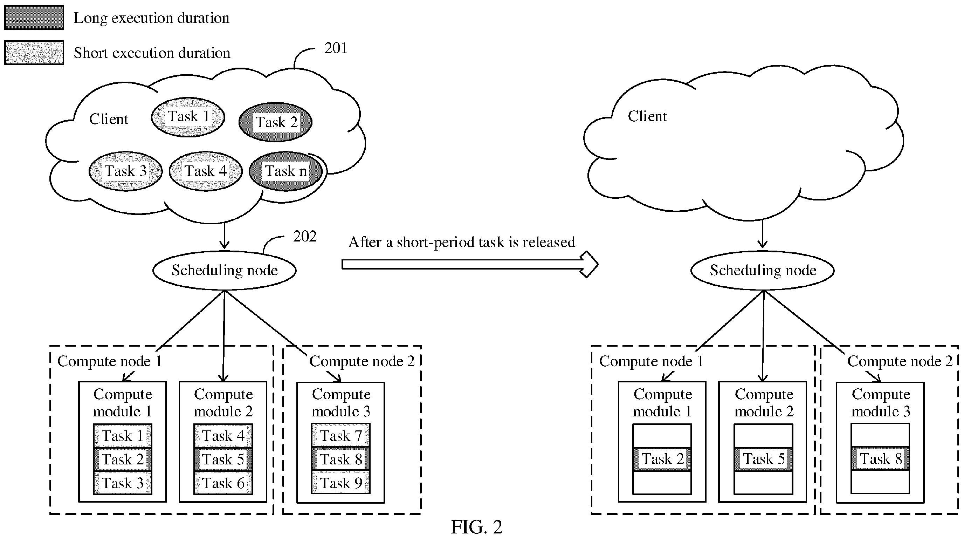

FIG. 2 is a schematic diagram of an operating scenario of resource scheduling according to an embodiment of this application;
FIG. 3 is a schematic diagram of an architecture of another resource scheduling system according to an embodiment of this application;
FIG. 4 is a schematic flowchart of a resource scheduling method according to an embodiment of this application;
FIG. 5 is a schematic diagram of a scheduling request according to an embodiment of this application;
FIG. 6 is a schematic diagram of another operating scenario of resource scheduling according to an embodiment of this application;
FIG. 7 is a schematic diagram of an architecture of another resource scheduling system according to an embodiment of this application;
FIG. 8 is a schematic diagram of a structure of an apparatus according to an embodiment of this application; and
FIG. 9 is a schematic diagram of a structure of a scheduling node according to an embodiment of this application.

### DESCRIPTION OF EMBODIMENTS

The following describes embodiments of this application with reference to the accompanying drawings in embodiments of this application. It should be noted that, in this application, words such as "example" or "for example" are used to represent giving an example, an illustration, or a description. Any embodiment or design scheme described as an "example" or "for example" in this application should not be construed as being more preferred or having more advantages than another embodiment or design scheme. Exactly, use of the word "example", "for example", or the like is intended to present a related concept in a specific manner.

A system architecture and a service scenario described in this application are intended to describe the technical solutions of this application more clearly, and do not constitute any limitation to the technical solutions provided in this application. A person of ordinary skill in the art may know that, with evolution of a system architecture and emergence of a new service scenario, the technical solutions provided in this application are also applicable to similar technical problems.

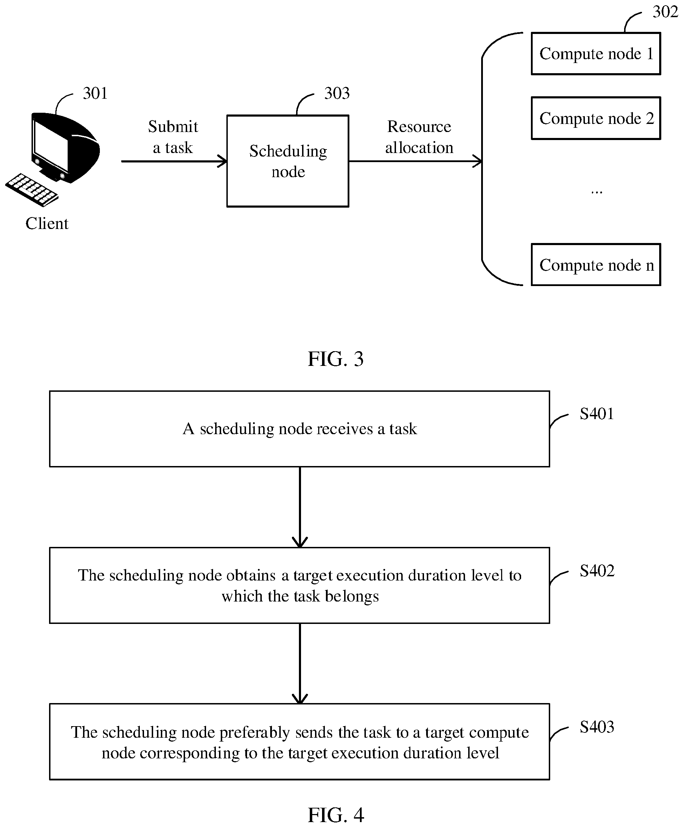

FIG. 3 is a schematic diagram of an architecture of a resource scheduling system according to an embodiment of this application. The resource scheduling system includes a client 301, a scheduling node 302, and at least one compute node (compute node) 303.

The client 301 is an electronic device with a data receiving and sending capability, and may be an entity device such as a host or a server, or may be a virtual device such as a virtual machine or a container. The client 301 is configured to submit a task, and the task needs to be executed by using a compute module in the compute node 302. Generally, the task submitted by the client may carry a program package (or an image file corresponding to an algorithm) for executing the task, and describe computing power required by the task (for example, one or more of a quantity of required central processing unit (central processing unit, CPU) resources, a quantity of required graphics processing unit (Graphics Processing Unit, GPU) resources, and a required memory size). The compute node schedules the task to the compute node for computing, and returns a result to the client. For example, the client may submit a facial recognition task, where the task carries a program package used for facial recognition or an image file of a facial recognition algorithm and a corresponding database file, and describes computing power required by the facial recognition task (for example, an 8-core CPU, 30% GPU resources, and 8G memory are required). After the compute node performs computation, a facial recognition result is returned to the client.

The compute node 302 is a device configured to provide a computing service, and may be an entity device such as a host or a server, or may be a virtual device such as a virtual machine or a container. The compute node 301 includes one or more compute modules, configured to provide a compute resource. The compute module may include one or more of a graphics processing unit (Graphics Processing Unit, GPU), a micro processing unit (Micro Processing Unit, MPU), a sound card (Sound Card), an accelerator card used for artificial intelligence computing, and the like. Further, the compute module may further include a compute resource such as a CPU and memory.

The scheduling node 303 is one or more nodes on which a scheduling system is deployed. The node may be a physical device such as a host or a server, or may be a virtual device such as a virtual machine or a container. The scheduling node 302 may receive a task from the client 301, and schedule, according to a scheduling policy, the task to the compute module in the compute node 302 for execution.

It should be noted that the client 301, the compute node 302, and the scheduling node 303 may be deployed in different physical devices, or may be deployed in a same physical device. This is not limited in this application.

FIG. 4 shows a resource scheduling method according to an embodiment of this application. The method may be implemented based on the resource scheduling system shown in FIG. 3. The method includes but is not limited to the following steps.

Step S401: A scheduling node receives a task.

Specifically, the task is a task submitted by a client. The task may be a facial recognition task, a video decoding task, a deep learning model training task, or the like. Generally, the task may carry a corresponding program package (or an image file corresponding to an algorithm, or the like). Further, computing power required by the task (for example, one or more of a quantity of required CPU resources, a quantity of required GPU resources, and a required memory size) may be further carried.

Step S402: The scheduling node obtains a target execution duration level to which the task belongs.

Specifically, tasks submitted by the client have a plurality of execution duration levels, and the target execution duration level may be used to represent a time length, and/or may indicate to use a target compute module of a target compute node to execute the task. For example, this application provides three execution duration levels: long execution duration, medium execution duration, and short execution duration. The long execution duration is greater than or equal to a first threshold, the medium execution duration is less than the first threshold and greater than a second threshold, and the short execution duration is less than or equal to the second threshold.

The following enumerates two methods for obtaining the execution duration level of the task.

Method 1: The scheduling node parses a scheduling request for the task to obtain the execution duration level of the task. Specifically, the scheduling node receives the scheduling request for the task, where the scheduling request includes the execution duration level of the task. For example, when submitting the task, the client uses the submitted task to carry indication information used to indicate the execution duration level, so that the scheduling node schedules the task based on the target execution duration indicated by the indication information.

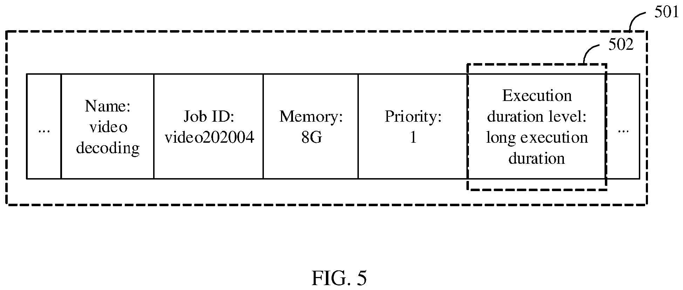

FIG. 5 is a schematic diagram of a possible scheduling request according to an embodiment of this application. An area 501 indicates a possible scheduling request received by the scheduling node, and includes a name (name), a job identification (job identification, job ID), memory (memory), a priority (priority), an execution duration level (task cycle), and the like of the scheduling request. The scheduling node parses the scheduling request shown in the area 501, and may obtain the execution duration level shown in an area 502, that is, the target execution duration level. Optionally, the scheduling request may further carry one or more of a quantity of CPU resources, a quantity of GPU resources, and the like (not shown in FIG. 5) for the task.

Method 2: The scheduling node determines the target execution duration level corresponding to execution duration required by the task. Specifically, when receiving the task, the scheduling node determines, based on information about the task, the execution duration required by the task, and may further determine the target execution duration level corresponding to the execution duration.

For example, the scheduling node stores execution duration information of a previously scheduled task. When receiving the task, the scheduling node may estimate the execution duration of the task based on execution duration of a previously scheduled similar task, and further obtain the target execution duration level of the task. Further, when the three execution duration levels are respectively long execution duration, medium execution duration, and short execution duration, if the execution duration that is required by the task and that is estimated by the scheduling node is greater than or equal to the first threshold, the execution duration level to which the task belongs is long execution duration. For example, the first threshold is 24 hours. If the execution duration that is required by the task and that is estimated by the scheduling node is greater than or equal to 24 hours, it may be determined that the execution duration level of the task is long execution duration. Similarly, if the estimated execution duration required by the task is less than the first threshold and greater than the second threshold, the execution duration level to which the task belongs is medium execution duration; or if the estimated execution duration required by the task is less than or equal to the first second threshold, the execution duration level to which the task belongs is short execution duration.

For another example, when submitting the task, the client may use the task to carry an image identification number (image ID) of an algorithm required by the task. Correspondingly, the scheduling node may estimate the execution duration of the task based on the image ID of the algorithm, to obtain the target execution duration level of the task. For example, when the three execution duration levels are respectively long execution duration, medium execution duration, and short execution duration, in an example in which the second threshold is 10 minutes, if the algorithm image identification number carried in the task indicates a portrait search algorithm, because a processing time of the portrait search algorithm is usually less than 10 minutes, the execution duration level of the task may be determined as short execution duration.

Step S403: The scheduling node preferably sends the task to the target compute node corresponding to the target execution duration level.

Specifically, in this embodiment of this application, a correspondence between an execution duration level and a compute node (or a compute module in a compute node) is established. After a task is received, the task is scheduled to a compute node corresponding to an execution duration level to which the task belongs. In this way, tasks corresponding to a same execution duration level may be preferably scheduled to a same compute node for execution, that is, tasks processed by a same compute module in a compute node usually belong to a same execution duration level. In this way, after running of a task with relatively short execution duration ends, an entire idle compute module is easier to obtain, so that resource fragments in the compute node are reduced and resource utilization is improved.

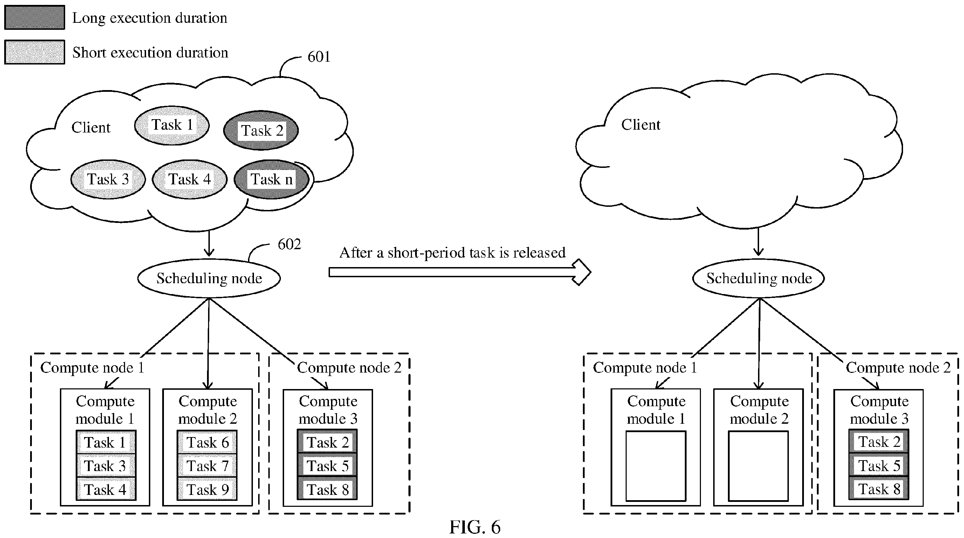

For example, FIG. 6 is a schematic diagram of a possible operating scenario of resource scheduling according to an embodiment of this application. Execution duration levels to which two tasks submitted by a client 301 belong are respectively long execution duration and short execution duration. The short execution duration corresponds to a compute node 1 (further, may specifically correspond to a compute module 1 and a compute module 2 in the compute node 1), and the long execution duration corresponds to a compute node 2 (further, may specifically correspond to a compute module 3 in the compute node 2). In other words, the short execution duration indicates that the compute module 1 or the compute module 2 in the compute node 1 is used to execute the task. Therefore, the scheduling node preferably sends the task with short execution duration to the compute node 1 for execution. In this way, after running of the task with short execution duration ends, an entire compute module in the compute node 1 may be used to execute another task, so that resource fragments are reduced and resource utilization is improved.

Optionally, a corresponding mechanism is used to ensure that each execution duration level has a corresponding compute node. In this case, the scheduling node directly sends the task to the target compute node corresponding to the target execution duration level.

Optionally, at a specific moment or in a specific time period, the target execution duration level has a corresponding target compute node. However, as a task on the target compute node is released or another operation is performed, at a subsequent moment or in a subsequent time period, the target execution duration level does not have a corresponding target compute node. In this case, that the scheduling node preferably sends the task to the target compute node corresponding to the target execution duration level may be specifically:
sending the task to the target compute node when the target compute node having the target compute module exists. For example, when the execution duration level of the task is short execution duration, the execution duration level indicates to use a compute module of a compute node 1 in a plurality of compute nodes to execute the task. If the compute node 1 having the compute module exists, the task is scheduled to the compute module of the compute node 1 for execution.

In a possible solution, compute modules may be marked with different labels, and the different labels represent that tasks at different execution duration levels are currently processed. The target compute module is a compute module marked with a first label, and the first label represents that the compute module executes a task at the target execution duration level. When performing scheduling, the scheduling node may preferably schedule the task to a compute module that is processing a task at a same execution duration level. In other words, the target execution duration level to which the task belongs may indicate to use a compute node having the compute module marked with the first label to execute the task.

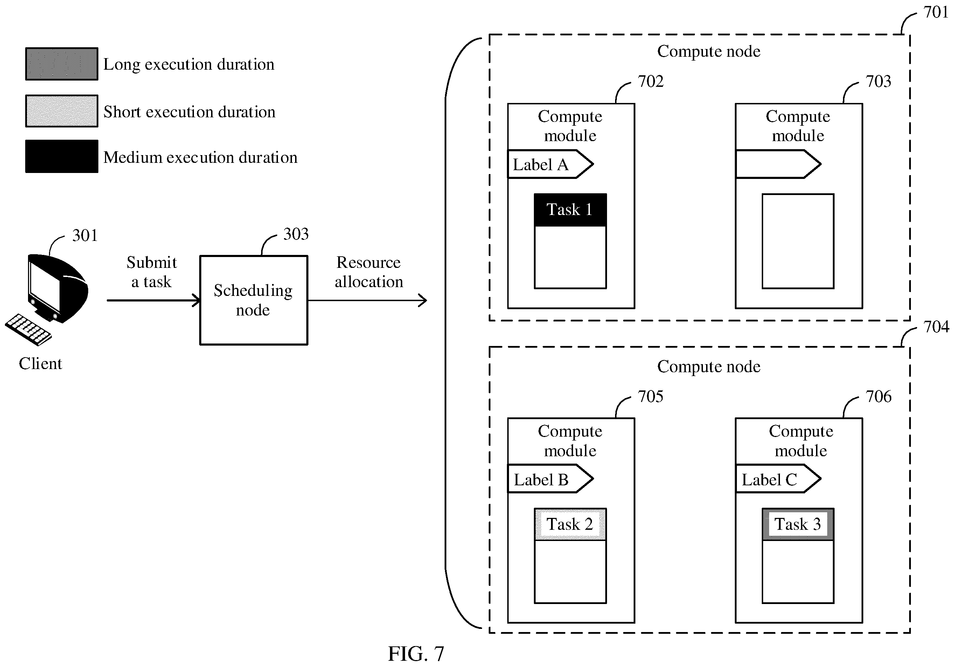

FIG. 7 is a schematic diagram of another possible operating scenario of resource scheduling according to an embodiment of this application. An execution duration level to which a task submitted by a client 301 belongs may be medium execution duration, short execution duration, or long execution duration. The medium execution duration, the short execution duration, and the long execution duration are respectively corresponding to compute modules whose labels are "label A", "label B", and "label C". A compute node 701 includes a compute module 702 and a compute module 703. The compute module 702 is executing a task 1, and an execution duration level to which the task 1 belongs is "medium execution duration". Therefore, a label of the compute module is "label A". The compute module 703 has no task being processed, and has no label. A compute node 704 includes a compute module 705 and a compute module 706. The compute module 705 is executing a task 2, and an execution duration level to which the task 2 belongs is "short execution duration". Therefore, a label of the compute module is "label B". The compute module 706 is executing a task 3, and an execution duration level to which the task 3 belongs is "long execution duration". Therefore, a label of the compute module is "label C". When an execution duration level of a task submitted by the client is medium execution duration, if a compute module with the "label A" exists, the task is sent to a compute node (that is, the compute node 701) to which the compute module (that is, the compute module 702) with the "label A" belongs for execution.

When the target compute node having the target compute module does not exist or the target compute module cannot execute the task, the task is sent to another compute node. For example, when the execution duration level of the task is short execution duration, the execution duration level indicates to use a compute module of a compute node 1 in a plurality of compute nodes to execute the task. If the compute node 1 having the compute module does not exist or the compute module cannot execute the task, the task is scheduled to another compute node for execution. Further, there may be the following optional cases.
Case 1: When the target compute node having the target compute module does not exist or the target compute module cannot execute the task, the task is sent to a compute node having a compute module that is not processing a task. The compute module that is not processing a task may be considered as an idle compute module. For ease of description, in embodiments of this application, a compute node having an idle compute module is referred to as a first compute node. It can be learned that when the target compute node having the target compute module does not exist or the target compute module cannot execute the task, the task may be scheduled to an idle compute module for processing.
Case 2: Compute modules may be marked with different labels, the target compute module is a compute module marked with a first label, and the first label represents that the compute module executes a task at the target execution duration level. The target execution duration level indicates to use a compute node to which the compute module marked with the first label belongs to execute the task. If the compute module marked with the first label does not exist, the task is sent to a compute node to which a compute module with no label belongs. For example, referring to FIG. 7, when the execution duration level to which the task submitted by the client belongs is medium execution duration, if the compute module with the "label A" does not exist, the task is sent to a compute node (that is, the compute node 701) to which a compute module (that is, the compute module 703) with no label belongs for execution.
Case 3: If the target compute node having the target compute module does not exist and the first compute node does not exist, the task is sent to a compute node to which a compute module marked with a second label belongs. The second label represents that the compute module is processing a task at a first execution duration level, and execution duration required by the task at the first execution duration level is shorter than execution duration required by the task. For ease of description, in embodiments of this application, a compute node to which a compute module marked with a second label belongs is referred to as a second compute node. For example, referring to FIG. 7, when the execution duration level to which the task submitted by the client belongs is medium execution duration, if the compute module with the "label A" does not exist and a compute module with no label does not exist, because the short execution duration is shorter than the medium execution duration, and the "label B" indicates that the compute module is processing a task with short execution duration, the task submitted by the client may be sent to a compute node (that is, the compute node 704) to which a compute module marked with the "label B" (that is, the compute module 705) belongs for execution.
Case 4: If the target compute node having the target compute module does not exist and the first compute node does not exist, the task is sent to a compute node to which a compute module marked with a third label belongs. The third label represents that the compute module is processing a task at a second execution duration level, and execution duration required by the task at the second execution duration level is longer than execution duration required by the task. For ease of description, in embodiments of this application, a compute node to which a compute module marked with a third label belongs is referred to as a third compute node. For example, referring to FIG. 7, when the execution duration level to which the task submitted by the client belongs is medium execution duration, if the compute module with the "label A" does not exist and a compute module with no label does not exist, because the long execution duration is longer than the medium execution duration, and the "label C" indicates that the compute module is processing a task with short execution duration, the task submitted by the client may be sent to a compute node (that is, the compute node 704) to which a compute module marked with the "label C" (that is, the compute module 706) belongs for execution.

Optionally, the scheduling node may modify the label of the compute module, so that the label of the compute module corresponds to the execution duration level of the task being processed by the compute module, and this facilitates subsequent task scheduling. For example, in Case 2, the execution duration level to which the task submitted by the client belongs is short execution duration. After the scheduling node sends the task to the compute node 701, the compute module 703 executes the task. Therefore, the scheduling node may change a label of the compute module 703 to "label A". In this way, when a task whose execution duration level is medium execution duration is received subsequently, the task may be preferably scheduled to the compute module 703 for execution.

Optionally, that the label of the compute module corresponds to the execution duration level of the task being processed by the compute module may be specifically that the label of the compute module corresponds to a highest execution duration level of a task being processed, that is, corresponds to a task with longest execution duration. For example, in Case 3, if the execution duration level to which the task submitted by the client belongs is short execution duration, after the scheduling node sends the task to the compute node 704, the compute module 705 executes the task. Because the original label of the compute module 705, that is, "label B", corresponds to the previously processed short execution duration, and the execution duration level to which the task submitted by the client belongs is longer than the short execution duration, the scheduling node may change the label of the compute module 705 to "label A".

Optionally, when execution of the task ends, the compute node may delete the label of the compute module. For example, in Case 2, the execution duration level to which the task belongs is short execution duration. After sending the task to the compute node 701, the scheduling node modifies the label of the compute module 703 to "label A". After execution of the task ends, the compute module 703 has no other task being executed. Therefore, the scheduling node may delete the label of the compute module 703, and this indicates that the compute module 703 is an idle compute module.

It can be learned that, in the method shown in FIG. 4, the scheduling node establishes a correspondence between an execution duration level and a compute node (or a compute module in a compute node). After a task is received, the task is scheduled to a compute node corresponding to an execution duration level to which the task belongs. Tasks at a same execution duration level may be preferably scheduled to a same compute node for execution, that is, tasks processed by a same compute module in a compute node usually belong to a same execution duration level. In this way, after running of a task with relatively short execution duration ends, an entire idle compute module is easier to obtain, so that resource fragments in the compute node are reduced and resource utilization is improved.

The method in embodiments of this application is described above in detail, and an apparatus in embodiments of this application is provided below.

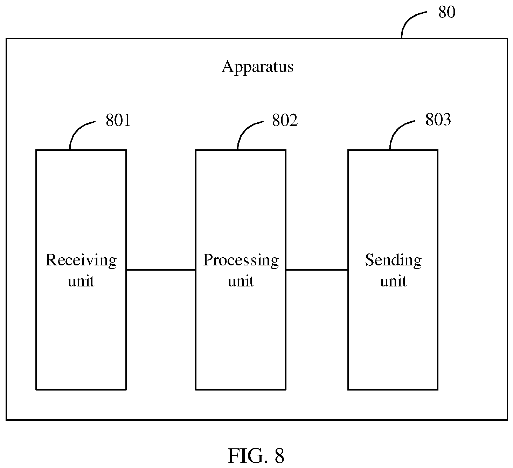

FIG. 8 is a schematic diagram of a structure of an apparatus 80 according to an embodiment of this application. The apparatus 80 may include a receiving unit 801, a processing unit 802, and a sending unit 803. Descriptions of the units are as follows:
The receiving unit 801 is configured to receive a task.
The processing unit 802 is configured to obtain a target execution duration level to which the task belongs, where the target execution duration level is used to represent a time length, and the target execution duration level indicates to use a target compute module of a target compute node in a plurality of compute nodes to execute the task.
The sending unit 803 is configured to preferably send the task to the target compute node corresponding to the target execution duration level.

In this embodiment of this application, the apparatus 80 establishes a correspondence between an execution duration level and a compute node (or a compute module in a compute node). After a task is received, the task is scheduled to a compute node corresponding to an execution duration level to which the task belongs. Tasks at a same execution duration level may be preferably scheduled to a same compute node for execution, that is, tasks processed by a same compute module in a compute node usually belong to a same execution duration level. In this way, after running of a task with relatively short execution duration ends, an entire idle compute module is easier to obtain, so that resource fragments in the compute node are reduced and resource utilization is improved.

In a possible implementation, the receiving unit 801 is further configured to receive a scheduling request for the task, where the scheduling request includes the target execution duration level.

The processing unit is specifically configured to parse the scheduling request, to obtain the target execution duration level.

It can be learned that when the task is submitted, indication information used to indicate the execution duration level may be carried in the scheduling request, so that the scheduling node schedules the task based on the target execution duration indicated by the indication information.

In another possible implementation, the processing unit 802 is specifically configured to determine an execution duration level corresponding to execution duration required by the task, and the determined execution duration level is the target execution duration level.

It can be learned that, when receiving the task, the apparatus 80 may determine, based on information about the task, the execution duration required by the task, and may further determine the target execution duration level corresponding to the execution duration. For example, the apparatus 80 stores execution duration of a previously scheduled task. When receiving the task, the apparatus 80 may estimate the execution duration of the task based on execution duration of a previously scheduled similar task, and further obtain the target execution duration level of the task.

In another possible implementation, the target execution duration level is one of three execution duration levels, and the three execution duration levels include long execution duration, medium execution duration, and short execution duration, where
the long execution duration is greater than or equal to a first threshold;
the medium execution duration is less than the first threshold and greater than a second threshold; and
the short execution duration is less than or equal to the second threshold.

In another possible implementation, the sending unit 803 is specifically configured to send the task to the target compute node when the target compute node having the target compute module exists.

In this embodiment of this application, the target execution duration level may indicate to use the target compute module of the target compute node in the plurality of compute nodes to execute the task. Therefore, the apparatus 80 sends the task to the target compute node, so that execution duration levels of tasks executed by the target compute module in the target compute node are the same. In this way, after running of a task with relatively short execution duration ends, a relatively large idle compute resource can be obtained, and resource fragments in the compute module are reduced.

In another possible implementation, the target compute module is a compute module marked with a first label, and the first label represents that the compute module executes another task at the target execution duration level.

In this embodiment of this application, compute modules may be marked with different labels, and the different labels represent that the compute modules currently process tasks at different execution duration levels. When performing scheduling, the apparatus 80 may preferably schedule the task to a compute module that is processing a task at a same execution duration level. Compared with a method in which the target execution duration is directly used to indicate the target module, a method in which different duration levels correspond to compute modules with different labels can improve system resource allocation flexibility, so that resource utilization is improved.

In another possible implementation, the sending unit 803 is specifically configured to send the task to another compute node when the target compute node having the target compute module does not exist.

In another possible implementation, the sending unit 803 is specifically configured to send the task to a first compute node when the target compute node having the target compute module does not exist, where the first compute node has a compute module that is not processing a task.

In another possible implementation, the sending unit 803 is further configured to send the task to a second compute node if the target compute node having the target compute module does not exist and the first compute node does not exist, where the second compute node has a compute module marked with a second label, the second label represents that the compute module is processing another task at a second execution duration level, and execution duration required by the task at the second execution duration level is shorter than execution duration required by the task.

In another possible implementation, the sending unit 803 is further configured to send the task to a third compute node if the target compute node having the target compute module does not exist and the first compute node does not exist, where the second compute node has a compute module marked with a third label, the third label represents that the compute module is processing another task at a third execution duration level, and execution duration required by the task at the third execution duration level is longer than execution duration required by the task.

In another possible implementation, the processing unit 802 is further configured to mark the target compute module of the target compute node with the first label, where the first label represents that the compute module executes a task at the target execution duration level.

It can be learned that the foregoing apparatus may modify the label of the compute module, so that the label of the compute module corresponds to the execution duration level of the task being processed by the compute module, and this facilitates subsequent scheduling of another task.

In another possible implementation, the processing unit 802 is further configured to delete the label of the target compute module if execution of the task ends and the target compute module is not processing another task.

It should be noted herein that division into the foregoing plurality of units is merely logical division based on functions, and is not intended to limit a specific structure of the apparatus 80. In specific implementation, some function modules may be subdivided into more fine function modules, and some function modules may be combined into one function module. However, regardless of whether the function modules are subdivided or combined, general procedures performed by the apparatus 80 in a resource scheduling process are the same.

For example, the plurality of units may alternatively be converted into a communications unit and a processing unit. The communications unit is configured to implement functions of the receiving unit 801 and the sending unit 803. For another example, the plurality of units may be changed into a resource management unit (Resource Manager) and a node management unit (Node Manager). The resource management unit is configured to implement functions of the receiving unit 801 and some functions of the processing unit 802, and the node management unit is configured to implement some functions of the processing unit 802 and functions of the sending unit 803. Usually, each unit corresponds to respective program code (or a program instruction). When the program code corresponding to the unit is run on a processor, the unit is enabled to perform a corresponding procedure to implement a corresponding function.

For implementation of the units in the apparatus 80, refer to corresponding descriptions in the method embodiment shown in FIG. 4. The apparatus 80 may be the scheduling node in the embodiment shown in FIG. 4.

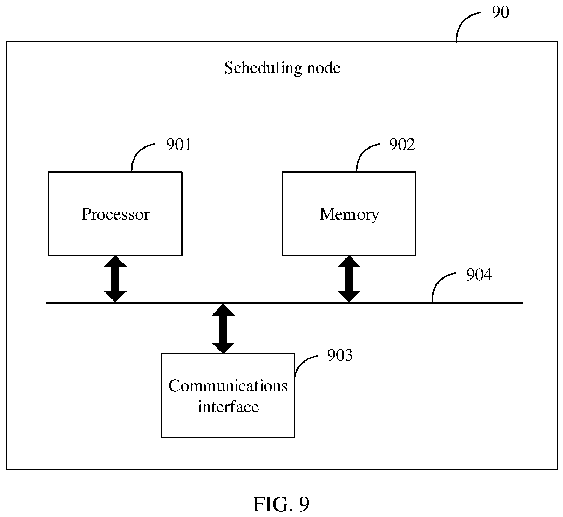

FIG. 9 is a schematic diagram of a structure of a scheduling node 90 according to an embodiment of this application. The scheduling node 90 may be a node having a data processing capability, or may be a component of a node having a data processing capability, for example, a chip or an integrated circuit. The scheduling node 90 may include a processor 901 and a memory 902. Optionally, a communications interface 903 and a bus 904 may be further included. The processor 901, the memory 902, and the communications interface 903 are connected by using the bus 1604.

The processor 901 is a module that performs an arithmetic operation and a logical operation, and may be one or a combination of processing modules such as a central processing unit (central processing unit, CPU), a graphics processing unit (graphics processing unit, GPU), or a microprocessor unit (microprocessor unit, MPU).

The memory 902 is configured to provide storage space, and the storage space may store data such as an operating system and computer instructions. The memory 902 includes but is not limited to a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM).

The communications interface 903 is configured to receive data from the outside and/or send data to the outside, and may be an interface of a wired link such as an Ethernet cable, or may be a wireless link (Wi-Fi, Bluetooth, or the like) interface. Optionally, the communications interface 903 may further include a transmitter (for example, a radio frequency transmitter or an antenna), a receiver, or the like coupled to the interface.

The processor 901 in the scheduling node 90 executes the computer instructions stored in the memory 902, and the scheduling node 90 performs the foregoing resource scheduling method.

For example, the processor 901 in the scheduling node 90 executes the computer instructions stored in the memory 902, so that the scheduling node 90 performs the following operations:
receiving a task by using the communications interface 903;
obtaining a target execution duration level to which the task belongs, where the target execution duration level is used to represent a time length, and the target execution duration level indicates to use a target compute module of a target compute node in a plurality of compute nodes to execute the task; and
preferably sending the task to the target compute node corresponding to the target execution duration level by using the communications interface 903.

In this embodiment of this application, the scheduling node 90 establishes a correspondence between an execution duration level and a compute node (or a compute module in a compute node). After a task is received, the task is scheduled to a compute node corresponding to an execution duration level to which the task belongs. Tasks at a same execution duration level may be preferably scheduled to a same compute node for execution, that is, tasks processed by a same compute module in a compute node usually belong to a same execution duration level. In this way, after running of a task with relatively short execution duration ends, an entire idle compute module is easier to obtain, so that resource fragments in the compute node are reduced and resource utilization is improved.

In a possible implementation, the processor 901 is specifically configured to: receive a scheduling request for the task by using the communications interface 903, where the scheduling request includes the target execution duration level; and
parse the scheduling request, to obtain the target execution duration level.

It can be learned that when the task is submitted, indication information used to indicate the execution duration level may be carried in the scheduling request, so that the scheduling node 90 schedules the task based on the target execution duration indicated by the indication information.

In another possible implementation, the processor 901 is specifically configured to determine an execution duration level corresponding to execution duration of the task, and the determined execution duration level is the target execution duration level.

It can be learned that when receiving the task, the scheduling node 90 may determine, based on information about the task, the execution duration required by the task, and may further determine the target execution duration level corresponding to the execution duration. For example, the scheduling node 90 stores execution duration of a previously scheduled task. When receiving the task, the scheduling node 90 may estimate the execution duration of the task based on execution duration of a previously scheduled similar task, and further obtain the target execution duration level of the task.

In another possible implementation, the target execution duration level is one of three execution duration levels, and the three execution duration levels include long execution duration, medium execution duration, and short execution duration, where
the long execution duration is greater than or equal to a first threshold;
the medium execution duration is less than the first threshold and greater than a second threshold; and
the short execution duration is less than or equal to the second threshold.

In another possible implementation, the processor 901 is specifically configured to send the task to the target compute node by using the communications interface when the target compute node having the target compute module exists.

In this embodiment of this application, the target execution duration level may indicate to use the target compute module of the target compute node in the plurality of compute nodes to execute the task. Therefore, the scheduling node 90 sends the task to the target compute node, so that execution duration levels of tasks executed by the target compute module in the target compute node are the same. In this way, after running of a task with relatively short execution duration ends, a relatively large idle compute resource can be obtained, and resource fragments in the compute module are reduced.

In another possible implementation, the target compute module is a compute module marked with a first label, and the first label represents that the compute module executes another task at the target execution duration level.

In this embodiment of this application, compute modules may be marked with different labels, and the different labels represent that the compute modules currently process tasks at different execution duration levels. When performing scheduling, the scheduling node 90 may preferably schedule the task to a compute module that is processing a task at a same execution duration level. Compared with a method in which the target execution duration is directly used to indicate the target module, a method in which different duration levels correspond to compute modules with different labels can improve system resource allocation flexibility, so that resource utilization is improved.

In another possible implementation, the processor 901 is specifically configured to send the task to another compute node in the plurality of compute nodes by using the communications interface 903 when the target compute node having the target compute module does not exist.

In another possible implementation, the processor 901 is specifically configured to send the task to a first compute node by using the communications interface 903 when the target compute node having the target compute module does not exist, where the first compute node has a compute module that is not processing a task.

In another possible implementation, the processor 901 is further configured to send the task to a second compute node by using the communications interface 903 if the target compute node having the target compute module does not exist and the first compute node does not exist, where the second compute node has a compute module marked with a second label, the second label represents that the compute module is processing another task at a first execution duration level, and execution duration required by the task at the first execution duration level is shorter than execution duration required by the task.

In another possible implementation, the processor 901 is further configured to send the task to a third compute node by using the communications interface 903 if the target compute node having the target compute module does not exist and the first compute node does not exist, where the second compute node has a compute module marked with a third label, the third label represents that the compute module is processing another task at a second execution duration level, and execution duration required by the task at the second execution duration level is longer than execution duration required by the task.

In another possible implementation, the processor 901 is further configured to mark the target compute module of the target compute node with the first label, where the first label represents that the compute module executes a task at the target execution duration level.

It can be learned that the scheduling node 90 may modify the label of the compute module, so that the label of the compute module corresponds to the execution duration level of the task being processed by the compute module, and this facilitates subsequent scheduling of another task.

In another possible implementation, the processor 901 is further configured to delete the first label of the target compute module if execution of the task ends and the target compute module is not processing another task.

For implementation of the units, refer to corresponding descriptions in the method embodiment shown in FIG. 4. The apparatus 90 may be the scheduling node in the embodiment shown in FIG. 4.

An embodiment of this application further provides a computer-readable storage medium. The computer-readable storage medium stores computer instructions, and the computer instructions are used to implement the foregoing resource scheduling method, for example, the resource scheduling method in the embodiment shown in FIG. 4.

An embodiment of this application further provides a chip system. The chip system includes at least one processor, a memory, and an interface circuit. The interface circuit is configured to provide information input/output for the at least one processor. The at least one memory stores computer instructions. When the computer instructions are run on one or more processors, the chip system performs the foregoing resource scheduling method, for example, the resource scheduling method in the embodiment shown in FIG. 4.

All or some of the foregoing embodiments may be implemented by using software, hardware, firmware, or any combination thereof. When software is used to implement the embodiments, all or some of the embodiments may be implemented in a form of a computer instruction product. When the computer instructions are loaded and executed on a computer, the procedures or functions according to embodiments of this application are all or partially implemented. The computer may be a general-purpose computer, a special-purpose computer, a computer network, or another programmable apparatus. The computer instructions may be stored in a computer-readable storage medium, or transmitted by using the computer-readable storage medium. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk (solid-state disk, SSD)), or the like.

A sequence of the steps in the method embodiments of this application may be adjusted, combined, or removed based on an actual requirement.

Modules in the apparatus embodiments of this application may be combined, divided, or deleted based on an actual requirement.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

## Claims

1. A resource scheduling method, wherein the method comprises:
receiving, by a scheduling node, a task;
obtaining, by the scheduling node, a target execution duration level to which the task belongs, wherein the target execution duration level is used to represent a time length, and the target execution duration level indicates to use a target compute module of a target compute node in a plurality of compute nodes to execute the task; and
preferably sending, by the scheduling node, the task to the target compute node corresponding to the target execution duration level.

2. The method according to claim 1, wherein before the obtaining, by the scheduling node, a target execution duration level to which the task belongs, the method further comprises:
receiving, by the scheduling node, a scheduling request for the task, wherein the scheduling request comprises the target execution duration level; and
the obtaining, by the scheduling node, a target execution duration level to which the task belongs comprises:
parsing, by the scheduling node, the scheduling request, to obtain the target execution duration level.

3. The method according to claim 1, wherein the obtaining, by the scheduling node, a target execution duration level to which the task belongs comprises:
determining, by the scheduling node, an execution duration level corresponding to execution duration of the task, wherein the determined execution duration level is the target execution duration level.

4. The method according to any one of claims 1 to 3, wherein the target execution duration level is one of three execution duration levels, and the three execution duration levels comprise long execution duration, medium execution duration, and short execution duration, wherein
the long execution duration is greater than or equal to a first threshold;
the medium execution duration is less than the first threshold and greater than a second threshold; and
the short execution duration is less than or equal to the second threshold.

5. The method according to any one of claims 1 to 4, wherein the preferably sending, by the scheduling node, the task to the target compute node corresponding to the target execution duration level comprises:
sending the task to the target compute node when the target compute node having the target compute module exists.

6. The method according to any one of claim 5, wherein the target compute module is a compute module marked with a first label, and the first label represents that the compute module executes another task at the target execution duration level.

7. The method according to any one of claims 1 to 6, wherein the preferably sending, by the scheduling node, the task to the target compute node corresponding to the target execution duration level comprises:
sending the task to another compute node in the plurality of compute nodes when the target compute node having the target compute module does not exist.

8. The method according to claim 7, wherein the sending the task to another compute node in the plurality of compute nodes when the target compute node having the target compute module does not exist comprises:
sending the task to a first compute node when the target compute node having the target compute module does not exist, wherein the first compute node has a compute module that is not processing a task.

9. The method according to claim 7 or 8, wherein the method further comprises:
sending, by the scheduling node, the task to a second compute node if the target compute node having the target compute module does not exist and the first compute node does not exist, wherein the second compute node has a compute module marked with a second label, the second label represents that the compute module is processing another task at a first execution duration level, and execution duration required by the task at the first execution duration level is shorter than execution duration required by the task.

10. The method according to claim 7 or 8, wherein the method further comprises:
sending, by the scheduling node, the task to a third compute node if the target compute node having the target compute module does not exist and the first compute node does not exist, wherein the third compute node has a compute module marked with a third label, the third label represents that the compute module is processing another task at a second execution duration level, and execution duration required by the task at the second execution duration level is longer than execution duration required by the task.

11. The method according to any one of claims 1 to 9, wherein the method further comprises:
marking, by the scheduling node, the target compute module of the target compute node with the first label, wherein the first label represents that the compute module executes a task at the target execution duration level.

12. The method according to any one of claims 1 to 11, wherein the method further comprises:
deleting, by the scheduling node, the first label of the target compute module if execution of the task ends and the target compute module is not processing another task.

13. A resource scheduling apparatus, comprising:
a receiving unit, configured to receive a task;
a processing unit, configured to obtain a target execution duration level to which the task belongs, wherein the target execution duration level is used to represent a time length, and the target execution duration level indicates to use a target compute module of a target compute node in a plurality of compute nodes to execute the task; and
a sending unit, configured to preferably send the task to the target compute node corresponding to the target execution duration level.

14. The apparatus according to claim 13, wherein the receiving unit is further configured to receive a scheduling request for the task, wherein the scheduling request comprises the target execution duration level; and
the processing unit is specifically configured to parse the scheduling request, to obtain the target execution duration level.

15. The apparatus according to claim 13, wherein the processing unit is specifically configured to determine an execution duration level corresponding to execution duration of the task, wherein the determined execution duration level is the target execution duration level.

16. The apparatus according to any one of claims 13 to 15, wherein the target execution duration level is one of three execution duration levels, and the three execution duration levels comprise long execution duration, medium execution duration, and short execution duration, wherein
the long execution duration is greater than or equal to a first threshold;
the medium execution duration is less than the first threshold and greater than a second threshold; and
the short execution duration is less than or equal to the second threshold.

17. The apparatus according to any one of claims 13 to 16, wherein the sending unit is specifically configured to send the task to the target compute node when the target compute node having the target compute module exists.

18. The apparatus according to any one of claim 17, wherein the target compute module is a compute module marked with a first label, and the first label represents that the compute module executes another task at the target execution duration level.

19. The apparatus according to any one of claims 13 to 18, wherein the sending unit is specifically configured to send the task to another compute node in the plurality of compute nodes when the target compute node having the target compute module does not exist.

20. The apparatus according to claim 19, wherein the sending unit is specifically configured to send the task to a first compute node when the target compute node having the target compute module does not exist, wherein the first compute node has a compute module that is not processing a task.

21. The apparatus according to claim 19 or 20, wherein the sending unit is further configured to send, by the scheduling node, the task to a second compute node if the target compute node having the target compute module does not exist and the first compute node does not exist, wherein the second compute node has a compute module marked with a second label, the second label represents that the compute module is processing another task at a first execution duration level, and execution duration required by the task at the first execution duration level is shorter than execution duration required by the task.

22. The apparatus according to claim 19 or 20, wherein the sending unit is further configured to send, by the scheduling node, the task to a third compute node if the target compute node having the target compute module does not exist and the first compute node does not exist, wherein the third compute node has a compute module marked with a third label, the third label represents that the compute module is processing another task at a second execution duration level, and execution duration required by the task at the second execution duration level is longer than execution duration required by the task.

23. The apparatus according to any one of claims 13 to 21, wherein the processing unit is further configured to mark the target compute module of the target compute node with the first label, wherein the first label represents that the compute module executes a task at the target execution duration level.

24. The apparatus according to any one of claims 13 to 22, wherein the processing unit is further configured to delete, by the scheduling node, the first label of the target compute module if execution of the task ends and the target compute module is not processing another task.

25. A scheduling node, wherein the scheduling node comprises a processor and a memory, and the processor is configured to execute computer instructions stored in the memory, so that the scheduling node implements the method according to any one of claims 1 to 12.

26. A computer-readable storage medium, wherein the computer-readable storage medium stores computer instructions, and the computer instructions are used to implement the method according to any one of claims 1 to 12.
